(19) Europäisches Patentamt
European Patent Office
Office européen des brevets

(11) **EP 4 439 845 B1**

(12) **EUROPEAN PATENT SPECIFICATION**

(45) Date of publication and mention
of the grant of the patent:
**08.04.2026 Bulletin 2026/15**

(21) Application number: **22898667.5**

(22) Date of filing: **25.11.2022**

(51) International Patent Classification (IPC):
*H01M 50/489* (2021.01)     *H01G 11/52* (2013.01)
*H01M 50/417* (2021.01)     *H01M 50/431* (2021.01)
*H01M 50/434* (2021.01)     *H01M 50/437* (2021.01)
*H01M 50/44* (2021.01)      *H01M 50/443* (2021.01)
*H01M 50/446* (2021.01)     *H01M 50/451* (2021.01)
*H01M 50/454* (2021.01)     *H01M 50/457* (2021.01)
*H01M 50/494* (2021.01)     *H01G 9/02* (2006.01)
*H01M 50/403* (2021.01)     *H01M 50/491* (2021.01)

(52) Cooperative Patent Classification (CPC):
H01G 11/52; H01G 9/02; H01M 50/403;
H01M 50/417; H01M 50/431; H01M 50/443;
H01M 50/451; H01M 50/457; H01M 50/489;
H01M 50/491; H01M 50/494; Y02E 60/10

(86) International application number:
**PCT/JP2022/043588**

(87) International publication number:
**WO 2023/095885 (01.06.2023 Gazette 2023/22)**

(54) **SEPARATOR FOR ELECTRIC POWER STORAGE DEVICE, AND ELECTRIC POWER STORAGE DEVICE IN WHICH SAME IS USED**

SEPARATOR FÜR EINE STROMSPEICHERVORRICHTUNG UND STROMSPEICHERVORRICHTUNG DAMIT

SÉPARATEUR POUR DISPOSITIF DE STOCKAGE D'ÉNERGIE ÉLECTRIQUE, ET DISPOSITIF DE STOCKAGE D'ÉNERGIE ÉLECTRIQUE DANS LEQUEL CE DERNIER EST UTILISÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.11.2021 JP 2021192318**
**26.11.2021 JP 2021192270**

(43) Date of publication of application:
**02.10.2024 Bulletin 2024/40**

(73) Proprietor: **Asahi Kasei Kabushiki Kaisha**
**Tokyo 1000006 (JP)**

(72) Inventors:
• **MORI, Shohei**
**Tokyo 100-0006 (JP)**

• **UCHIDA, Kazunori**
**Tokyo 100-0006 (JP)**
• **HAMASAKI, Shinya**
**Tokyo 100-0006 (JP)**

(74) Representative: **Strehl & Partner mbB**
**Maximilianstrasse 54**
**80538 München (DE)**

(56) References cited:
EP-A1- 1 667 252       EP-A1- 3 719 865
WO-A1-2020/196120      JP-A- 2010 092 879
JP-A- 2021 504 874      JP-B2- 5 206 659
US-A1- 2010 021 822

## EP 4 439 845 B1

**Description**

Technical Field

The present disclosure relates to an electricity storage device separator and an electricity storage device using the same.

Background Art

It is generally known that nonwoven fabrics such as those of cellulose can be used as microporous membranes for electricity storage device separators (hereinafter, also simply referred to as "separators") to provide microporous membranes having high electrolytic solution liquid absorbency. However, nonwoven fabrics have large fiber diameters, and are thus difficult to utilize for thin membrane formation.

As a method for achieving a separator comprising a thin membrane and having high liquid absorbency, separators using a microporous membrane containing an inorganic filler therein are known. For example, PTL 1 describes a nonaqueous electrolytic solution secondary cell separator composed of a polymer porous membrane containing an inorganic filler. However, poor pore opening, such as pore opening points formed as independent pores, easily occurs in a microporous membrane containing an inorganic filler therein.

In order to form communicating pores from the viewpoint of obtaining high liquid absorbency, a method of biaxial stretching when manufacturing a microporous membrane is known. However, during biaxial stretching, heat shrinkage amount is easily increased, and high dimensional accuracy in TD is difficult.

Microporous membranes provided on the outermost layer with a layer free of an inorganic filler are also known. However, if the pore opening method thereof differs from that of the inner layer, finding the optimal pore opening conditions such as stretching is difficult. A method of laminating a coating material comprising an inorganic filler and a resin binder on the surface of a microporous membrane is also known. For example, PTL 2 describes a laminated porous film having a coating layer comprising a filler and a resin binder laminated on at least one side of a polyolefin resin porous film. However, in this method, there is a concern that the binder component contained in the coating material may obstruct the pores of the microporous membrane.

PTL3 discloses polyolefin resin-based separator membranes for secondary batteries meant to absorb the strain produced when the membrane undergoes compression, while retaining their permeability and electrical insulation performances.

Citation List

Patent Literature

    PTL 1: Japanese Unexamined Patent Publication (Kokai) No. 2005-71979
    PTL 2: Japanese Unexamined Patent Publication (Kokai) No. 2012-20437
    PTL3: US2010021822A1

Non Patent Literature

    NPL 1: PS. Liao, TS. Chen, and PC. Chung, "A Fast Algorithm for Multilevel Thresholding", Journal of Information Science and Engineering, Vol. 17, 2001, pp. 713-727
    NPL 2: Michael Doube, Michal M Klosowski, Ignacio Arganda-Carreras, Fabrice P Cordelieres, Robert P Dougherty, Jonathan S Jackson, Benjamin Schmid, John R Hutchinson, and Sandra J Shefelbine, "BoneJ: Free and extensible bone image analysis in ImageJ", Bone, Volume 47, Issue 6, 2010 Dec, pp. 1076-1079

Summary of Invention

Technical Problem

An object of the present disclosure is to provide an electricity storage device separator having high liquid absorbency and high strength and an electricity storage device using the same. Solution to Problem

2

The invention is defined by the independent claim. Preferred embodiments are described by the dependent claims.

Advantageous Effects of Invention

In the present disclosure, an electricity storage device separator having high liquid absorbency and high strength and an electricity storage device using the same can be provided. Brief Description of Drawings

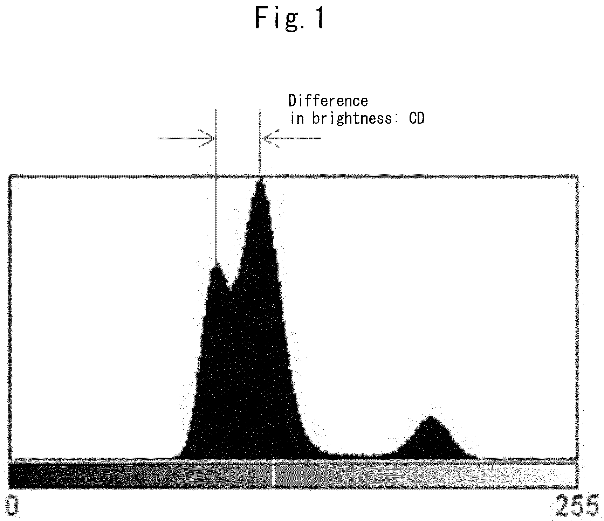

[Fig. 1] Fig. 1 is an example of a brightness histogram (horizontal axis: brightness, vertical axis: frequency) in an image processing region.

Description of Embodiments

<<Electricity storage device separator>>

The electricity storage device separator (hereinafter, also simply referred to as "separator") of the present disclosure comprises an inorganic filler-containing layer (microporous membrane (A)) comprising an inorganic filler and a polyolefin. The MFR of the microporous membrane (A) is 0.05 or greater and 5 or less. The microporous membrane (A) comprises 20 wt% or greater and less than 100 wt% of the inorganic filler, has an average pore size for pores in an ND-MD cross section is 100 nm or more and 1500 nm or less, and the air permeability is 340 s/100 ml or less. Hereinafter, each feature will be described in detail.

<Microporous membrane (A)>

In the present disclosure, the inorganic filler-containing layer comprising an inorganic filler and a polyolefin is also referred to as a "microporous membrane (A)". The microporous membrane (A) contains an inorganic filler and a polyolefin resin. By containing an inorganic filler, wettability with an electrolytic solution inside the separator is improved, and liquid absorbency of the electrolytic solution can be improved. By containing an inorganic filler, the interface between the inorganic filler and the polyolefin resin acts as a pore opening point during lamellar pore opening, large pores are easily formed, a connecting structure of pores is easily formed, and thus a microporous membrane having high liquid absorbency can be obtained. By melt-extruding at a high drawdown ratio in the MD during membrane production, lamellar crystals having high crystal orientation is obtained, and communicating pores in the thickness direction are easily formed during pore opening. Since lamellar crystals having high crystal orientation easily form communicating pores, a microporous membrane having high liquid absorbency can be obtained.

The content ratio of the inorganic filler in the microporous membrane (A) based on the total weight of the microporous membrane (A) is 20 wt% or greater and less than 100 wt%, and is preferably 20 wt% or greater and 90 wt% or less, 30 wt% or greater and 90 wt% or less, more preferably 25 wt% or greater and 85 wt% or less, even more preferably 30 wt% or greater and 80 wt% or less, still more preferably 35 wt% or greater and 75 wt% or less, and particularly preferably 40 wt% or greater and 70 wt% or less. The content ratio of the inorganic filler may be preferably 40 wt% or greater and 90 wt% or less, more preferably 50 wt% or greater and 90 wt% or less, and even more preferably 60 wt% or greater and 90 wt% or less. When the content ratio of the inorganic filler in the microporous membrane (A) is 20 wt% or greater, without limiting to theory, it is considered that since lamellar pore opening and filler pore opening occur in a well-balanced manner, and independent openings formed in the horizontal direction by filler pore opening are connected by openings formed in the vertical direction by lamellar crystals, high permeability and high liquid absorbency can be achieved. The upper limit of the content ratio of the inorganic filler is not limited. For example, if the upper limit is 90 wt% or less, a layer comprising an inorganic filler and lamellar crystals can be formed by melt-extruding at a high drawdown ratio, and a separator having high permeability can then be obtained by uniaxial stretching. The separator tends to have a low risk of membrane rupture and improved thickness uniformity during film formation. If the upper limit is 70 wt% or less, a network structure of resin can be formed without interruption by the inorganic filler, and thus high MD strength can be maintained and the manufacture of a wound body around which electrodes and the separator are wound is facilitated.

Examples of the inorganic filler include oxide-based ceramics such as alumina, silica, titania, zirconia, magnesia, ceria, yttria, zinc oxide, and iron oxides; nitride-based ceramics such as silicon nitride, titanium nitride, and boron nitride; ceramics such as silicon carbide, calcium carbonate, magnesium sulfate, aluminum sulfate, barium sulfate, aluminum hydroxide, aluminum hydroxide oxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomite, and quartz sand; and glass fibers. From the viewpoint of imparting safety and heat resistance in a cell, at least one selected from the group consisting of barium sulfate, titania, alumina, and boehmite is preferable.

The particle size of the inorganic filler is preferably 60 nm or more and 2000 nm or less, preferably 100 nm or more and 1800 nm or less, more preferably 200 nm or more and 1500 nm or less, and even more preferably 350 nm or more and 1000 nm or less. From the viewpoint of film formation stability during extrusion, when the particle size is 60 nm or more, film formation is facilitated without a significant increase in pressure during extrusion. In addition, when 60 nm or more, the inorganic filler is more dispersed, significant portions having low concentrations of inorganic filler in a separator are less likely to form, the inorganic filler acts as a resistance component during high-temperature melting, and interelectrode resistance is easily maintained. In addition, piping is less likely to abrade and metal foreign matter contained in the separator is reduced. When the inorganic filler is 2000 nm or less, the risk of membrane rupture during lamellar pore opening is reduced, the inorganic filler is less likely to be a source for stress concentration with respect to layer thickness, and strength is improved. Further, the thickness of the separator is less likely to vary, and quality is improved. When 2000 nm or less, the inorganic filler has a large surface area, and thus high liquid absorbency is easily obtained.

The Mohs hardness of the inorganic filler is preferably 5 or less. When the Mohs hardness is 5 or less, abrasion with a metal surface is suppressed when the inorganic filler comes into contact with the piping flow path of the film-forming equipment, for example, abrasion with SUS material used for the piping is reduced and the risk of the material mixed into the separator can be reduced. When the separator is assembled into a cell, the mixed metal foreign matter may elute during charging-discharging cycles to form dendrites, particularly on the negative electrode side, to cause a short circuit in the cell, and is thus not preferable.

An inorganic filler surface-treated with a surface treatment agent to increase the dispersibility thereof in a polyolefin resin can be used. Examples of the surface treatment agent include treatments by saturated fatty acids and/or salts thereof (saturated fatty acid salts), unsaturated fatty acids and/or salts thereof (unsaturated fatty acid salts), polysiloxanes, and silane coupling agents. From the viewpoint of dispersibility in a polyolefin resin, the treatment agent is a saturated fatty acid or a salt thereof, an unsaturated fatty acid or a salt thereof, a saturated fatty acid having 8 or more carbon atoms or a salt thereof, or an unsaturated fatty acid having 8 or more carbon atoms or a salt thereof. Since the inorganic filler is highly dispersed and the surfaces of the inorganic filler are exposed in a large amount to the inside of the separator, liquid absorbency is improved.

The surface hydrophilicity of the inorganic filler is preferably 0.1 or greater and 0.8 or less. When the surface hydrophilicity is 0.8 or less, dispersion of the inorganic filler is facilitated, and agglomeration can be suppressed. When the surface hydrophilicity is 0.1 or greater, the affinity for an electrolytic solution is increased, and ion conductivity tends to improve.

The surface treatment amount of the inorganic filler depends on the particle size of the inorganic filler, but is preferably 0.1 wt% or greater and 10 wt% or less based on the total weight of surface-treated inorganic filler. By having a surface treatment amount of 10 wt% or less, an excess of surface treatment agent can be reduced, and by having a surface treatment amount of 0.1 wt% or greater, satisfactory dispersibility is obtained.

The basis weight of the inorganic filler is preferably 0.15 mg/cm$^2$ or more. When the basis weight is 0.15 mg/cm$^2$ or more, the inorganic filler is unlikely to migrate to an interelectrode gap with the resin during high-temperature melting of the separator, the inorganic filler remains as an inorganic filler layer that acts as a resistance component between electrodes, and thus there is a tendency that a dense inorganic filler layer is formed. The inorganic filler can act as a resistance component and maintain interelectrode resistance, and safety of the cell tends to improve.

The microporous membrane (A) comprises a polyolefin resin, The polyolefin resin is a polymer comprising, as repeating units, monomers having a carbon-carbon double bond. The monomer constituting the polyolefin resin is not limited. Examples include monomers having 3 to 10 carbon atoms and carbon-carbon double bonds, for example, ethylene, propylene, 1-butene, 4-methyl-1-pentene, 1-hexene, and 1-octene. The polyolefin can be a homopolymer, a copolymer, or a multistage-polymerized polymer, and is preferably a homopolymer.

The content of the polyolefin resin in the microporous membrane (A) is preferably 10 wt% or greater and 80 wt% or less, more preferably 20 wt% or greater and 70 wt% or less, even more preferably 20 wt% or greater and 60 wt% or less, still more preferably 20 wt% or greater and 50 wt% or less, and particularly preferably 20 wt% or greater and 40 wt% or less. When the amount of polyolefin resin based on the total weight of the microporous membrane (A) is within this range, a separator having high strength while having high permeability is easily obtained.

The polyolefin resin is preferably at least one selected from the group consisting of polyethylene, polypropylene, and copolymers of polyethylene and polypropylene, from the viewpoint of shutdown characteristics. Examples of the polyethylene include low-density polyethylene (LDPE), medium-density polyethylene (MDPE), and high-density polyethylene (HDPE). From the viewpoint of easily obtaining a large pore size and further increasing permeability and liquid absorbency, high-density polyethylene (HDPE) is more preferable.

The MFR of the polyolefin resin contained in the microporous membrane (A), when measured at a load of 2.16 kg and a temperature of 190°C when the main component is polyethylene, and in other cases, at a temperature of 230°C particularly when the main component is polypropylene, is preferably 0.2 or greater and 15 or less, and preferably 0.25 or greater or 0.30 or greater and preferably 5.00 or less or 1.00 or less. The reason therefor, without limiting to theory, is considered that when a thermoplastic resin having a high MFR of a polyolefin resin and an inorganic filler are kneaded, uniform kneading is achieved and the inorganic filler is dispersed to form a uniform separator; when the separator is incorporated into a cell, during high-temperature melting of the separator, an insulating layer of a uniform inorganic filler layer can be formed, and thus an effect of maintaining resistance between electrodes is enhanced. When the MFR of the polyolefin resin is too low, the inorganic filler is not dispersed, significant portions having low concentrations of inorganic filler within the separator are formed, and when the separator is incorporated into a cell, there is a local shortage of inorganic filler in the insulating layer formed during high-temperature melting, and thus interelectrode resistance likely cannot be maintained due to the nonuniform inorganic filler layer. From the viewpoint of film formation stability during extrusion, when the MFR of the polyolefin resin is 0.2 or greater, the risk of membrane rupture tends to increase at a high drawdown ratio due to crystals orienting during melt extrusion. When the MFR of the polyolefin resin is 15 or less, crystals are easily oriented, a decrease in degree of orientation can be suppressed, lamellar pore opening is facilitated, and high permeability can be achieved.

The MFR of the microporous membrane (A) is 0.05 or greater and 5 or less. The MFR of the microporous membrane (A) is measured at a load of 2.16 kg at a temperature of 230°C. The MFR of the microporous membrane (A) is almost unchanged from the MFR of the raw material composition forming the microporous membrane (A). When the MFR of the microporous membrane (A) is 0.05 or greater, film formation is facilitated without a significant increase in pressure during extrusion, and thus film formation stability during extrusion is increased. When the MFR of the microporous membrane (A) is 0.05 or greater, abrasion of the equipment piping surface with the inorganic filler in the flow within the piping during melt extrusion of the microporous membrane (A) not having a microporous membrane (B) laminated thereon can be reduced, the content of metal components in the separator can be reduced, and thus short circuit resistance of a cell can be improved. When the MFR of the microporous membrane (A) is 5 or less, a decrease in degree of orientation can be suppressed, lamellar pore opening is facilitated, and liquid absorbency can be increased. Preferably, the MFR is 0.1 or greater and 3 or less. More preferably, the MFR is 0.2 or greater and 2 or less.

The microporous membrane (A) comprises open pores, and the contours of the open pores are formed by the polyolefin resin only or by the inorganic filler and the polyolefin resin. The open pores of the microporous membrane (A) preferably comprise pores configured by the inorganic filler and the polyolefin resin. The average pore size of pores (average pore size) in an ND-MD cross section is 100 nm or more and 1500 nm or less, more preferably 200 nm or more and 840 nm or less, even more preferably 250 nm or more and 800 nm or less, and still more preferably 300 nm or more and 750 nm or less. When the average pore size is 100 nm or more, there is a tendency that a structure in which voids are connected to each other is formed and high permeability is obtained. When the average pore size is 1500 nm or less, the microporous membrane (A) is less likely to be a source for stress concentration with respect to the thickness thereof, and thus a strength decrease of the separator is less likely to occur. Further, when the average pore size is 1500 nm or less, voltage resistance is increased and a short circuit of the cell is less likely to occur, thereby improving yield during cell manufacturing. The average pore size of the microporous membrane (A) can be measured by observing an ND-MD cross section of the microporous membrane (A) with a scanning electron microscope (SEM), as described below in the Examples section.

It is preferable that the long pore diameters of the microporous membrane (A) be arranged in one direction. In the specification of the present application, "long pore diameter" refers to the longest line segment connecting any two points on the contour of an open pore. Without limiting to theory, it is preferable that when long pore diameters are arranged in one direction, the crystals of the resin constituting the separator be strongly oriented, increasing strength in the direction of the long pore diameters and facilitating the manufacture of a wound body around which electrodes and the separator are wound when producing a cylindrical cell. The arrangement of the long pore diameters can be confirmed by observing a cross section of the microporous membrane (A) with a scanning electron microscope (SEM), as described below in the Examples section. "Arranged in one direction" means that 90% or more of fibrils in the above electron microscope image of the separator surface are included within an angular range of the extension direction ± 20 degrees. Specifically, when the long axes of 90% or more of the pores in the above electron microscope image are included within an angular range of ±20 degrees, the arrangement of long pore diameters is determined to be "arranged in one direction".

The area ratio of open pores to the cross sectional area as an index of porosity of the microporous membrane (A) is 20% or greater and 60% or less. The area ratio is preferably 30% or greater, more preferably 35% or greater, and preferably 55% or less, more preferably 50% or less. By setting the area ratio of open pores to 60% or less, the ratio of resin and organic filler can be increased, and a network structure of the solid content is formed. Thus, stress concentration during puncture is relaxed, elongation at break is improved, and high puncture strength is easily obtained. When an attempt is made to increase stretching ratio in the MD to increase the open pore ratio, there is a tendency that the pores collapse easily in the thickness direction, the connecting structure between the pores is segmented, and air permeability deteriorates. When the area ratio of open pores is 20% or greater, the low ratio of resin and inorganic filler facilitates the formation of a connecting structure between pores, and thus high permeability is obtained.

The microporous membrane (A) may further contain an elastomer in addition to the polyolefin resin and the inorganic filler. Examples of the elastomer include thermoplastic elastomers and thermosetting elastomers, and thermoplastic elastomers are preferable. In the specification of the present application, thermoplastic elastomers are encompassed in thermoplastic resins. By containing a thermoplastic elastomer in the microporous membrane (A), melt tension can be reduced without impairing the balance of strength and air permeability. As a result, when a thermoplastic resin having a high MFR and expected to have high strength is used, even if melt tension is high, by containing the thermoplastic resin, it is possible to form a thin membrane, and a thin high-strength separator can be obtained.

The thickness of the microporous membrane (A) is preferably 1 $\mu$m or more and 27 $\mu$m or less, and more preferably 1 $\mu$m or more and 20 $\mu$m or less. When the thickness is 1 $\mu$m or more, heat resistance of the electricity storage device separator is improved. When the thickness is 27 $\mu$m or less, energy density of the electricity storage device can be increased. In consideration of heat resistance and energy density, the thickness is preferably 3 $\mu$m or more and 15 $\mu$m or less, and more preferably 5 $\mu$m or more and 10 $\mu$m or less. The ratio of the thickness of the microporous membrane (A) to the thickness of the entire separator, in consideration of heat resistance, ion permeability, and physical strength of the separator, is preferably 15% or greater and 90% or less, more preferably 20% or greater and 80% or less, and even more preferably 20% or greater and 60% or less.

<Microporous membrane (B)>

The electricity storage device separator of the present disclosure, in addition to the microporous membrane (A), may comprise a microporous membrane (B) mainly composed of a polyolefin resin and arranged on one side or both sides of the microporous membrane (A). In the specification of the present application, "mainly composed of" means that a component is contained in an amount of greater than 50 wt%, and the amount may be 60 wt% or greater, 70 wt% or greater, 80 wt% or greater, 90 wt% or greater, 95 wt% or greater, 99 wt% or greater, or 100 wt%. It is preferable that the microporous membrane (B) be free of an inorganic filler.

The microporous membrane (B) is preferably a microporous layer mainly composed of a polyolefin resin. By having an outer layer of polyolefin, film formability is improved, melt extrusion can be carried out at a high drawdown ratio in the MD during film formation, and high crystal orientation is obtained, thus high permeability is easily obtained. When the microporous membrane (B) has a three-layer structure of polyolefin microporous layer/inorganic content layer/polyolefin microporous layer, mechanical strength due to the polyolefin microporous layers and oxidation resistance during contact with electrode surface can be maintained while having high liquid absorbency from the inorganic content layer. From the viewpoint of abrasion resistance, the microporous membrane (B) may have a five-layer structure or a nine-layer structure having a polyolefin microporous layer preferably as outermost layers and therebetween polyolefin microporous layer/-inorganic content layer/polyolefin microporous layer/inorganic content layer/polyolefin microporous layer/inorganic content layer/polyolefin microporous layer. From the viewpoint of thin-film properties, a three-layer structure is preferable.

In view of ease of lamellar pore opening, the polyolefin resin of the microporous membrane (B) is preferably polyethylene or polypropylene, and is preferably polypropylene from the viewpoint of strength against puncture (hereinafter, also referred to as "PP microporous layer"). The thickness of the microporous membrane (B) with respect to the overall thickness of the separator is preferably 10% or greater and 90% or less. At 10% or greater, the ratio of the layer having a network structure in which resin is continuously connected is increased, and thus high strength can be obtained. At 90% or less, the required thickness of the inorganic layer suitable for high liquid absorbency can be ensured, and thus high liquid absorbency can be achieved.

The tacticity of polypropylene in the microporous membrane (B) is not limited, and examples include atactic, isotactic, and syndiotactic homopolymers. The polypropylene according to the present disclosure is preferably an isotactic or syndiotactic, highly crystalline homopolymer.

The polypropylene of the microporous membrane (B) is preferably a homopolymer, and may be a copolymer, for example, a block polymer, copolymerized with a small amount of a comonomer other than propylene, for example, an $\alpha$-olefin comonomer. The amount of propylene structure contained as repeating units in the polypropylene is not limited, and for example, may be 70 mol% or greater, 80 mol% or greater, 90 mol% or greater, 95 mol% or greater, or 99 mol% or greater. The amount of repeating units derived from a comonomer other than the propylene structure contained in the polypropylene is not limited, and for example, may be 30 mol% or less, 20 mol% or less, 10 mol% or less, 5 mol% or less, or 1 mol% or less. The polypropylene can be used singly or by mixing two or more.

The MFR of the polypropylene in the microporous membrane (B), from the viewpoint of obtaining a microporous membrane (B) having higher strength, may be preferably 8.0 g/10 min or less, for example, 6.0 g/10 min or less, 4.0 g/10 min or less, 3.0 g/10 min or less, 2.0 g/10 min or less, or 1.1 g/10 min or less. The lower limit value of the MFR of the microporous membrane (B) is not limited from the viewpoint of exhibiting satisfactory film formability and uniformity in membrane thickness, and for example, may be 0.3 g/10 min or more, 0.35 g/10 min or more, 0.4 g/10 min or more, 0.45 g/10 min or more, or 0.5 g/10 min or more.

The thickness of the microporous membrane (B) is preferably 1 $\mu$m or more and 10 $\mu$m or less, and more preferably 3 $\mu$m or more and 6 $\mu$m or less. When the thickness is 1 $\mu$m or more, the microporous membrane (A) can be coated without generating layer defects (missing portions), thus abrasion of the SUS material used for the piping is reduced, and the risk of substances originating from the piping being mixed inside the separator is easily reduced. When the thickness is 10 $\mu$m or less, high liquid absorbency is easily obtained based on the microporous layer (A) comprising an inorganic filler.

<Separator>

The electricity storage device separator may be a separator of a single-layer structure consisting only of the microporous membrane (A), or may be a separator of a two-layer structure having a microporous membrane (B) laminated to a microporous membrane (A). The electricity storage device separator may be a separator of a three-layer structure of microporous membrane (B)/microporous membrane (A)/microporous membrane (B), where the microporous (A) is the inner layer and the microporous membranes (B) are the outer layers. The electricity storage device separator may have a structure of three or more layers. By having a three-layer structure of PO microporous layer/inorganic content layer/PO microporous layer, wherein the microporous membrane (B) (hereinafter, also referred to as "PO microporous layer") mainly composed of a polyolefin resin is arranged on both sides of the microporous membrane (A) (hereinafter, also referred to as "inorganic content layer") containing an organic filler, there is less chance for the inorganic filler to come into contact with the piping flow path of the film-forming equipment, and abrasion of the metal surface is suppressed. Particularly, contact with the inorganic filler at the lip portion, where the cross sectional area during extrusion is small, the flow rate is high, and the risk of abrasion is considered the highest due to corrosion when trace amounts of additives come into contact with air, can be avoided. As such, the chance of contact between the inorganic filler and the equipment piping surfaces can be reduced or eliminated, thereby reducing the possibility that a metal component such as Fe is contained in the separator, and thus short circuit resistance of a cell can be improved.

The heat shrinkage rate in the TD at 130°C of the electricity storage device separator is 4% or less, preferably 3% or less, and more preferably 1% or less. When the heat shrinkage rate in the TD at 130°C is 4% or less, lamellar pore opening is facilitated by increasing the degree of crystal orientation, and cracks are likely to occur in the vertical direction during pore opening. As a result, a pore structure having high straightness is obtained by enlarging the pores in a subsequent hot-stretching, and liquid absorbency tends to increase. In addition, when the heat shrinkage rate in the TD is 4% or less, an insulating film that maintains the separator area can be formed and insulating properties between electrodes can be maintained, thus resistance to a short circuit due to heat shrinkage in the TD in laminated cell short circuit text is increased. The lower limit of the heat shrinkage rate is not particularly limited, and for example, is -4% or greater, preferably -3% or greater, more preferably -2% or greater, and even more preferably -1% or greater. When the heat shrinkage rate in the TD is -4% or greater, wrinkling is less likely to occur when cell temperature rises, and since stress is applied evenly to the separator, the problem of tearing is less likely to occur. The heat shrinkage rate in the TD takes on a negative value because the components contained inside the separator may expand due to heating.

The air permeability (also called "air permeability resistance") of the electricity storage device separator is 340 s/100 ml or less, more preferably 50 s/100 ml or more and 340 s/100 ml or less, even more preferably 50 s/100 ml or more and 300 s/100 ml or less, still more preferably 50 s/100 ml or more and 250 s/100 ml or less, particularly preferably 100 s/100 ml or more and 230 s/100 ml or less, and particularly preferably 120 s/100 ml or more and 210 s/100 ml or less. The air permeability may be preferably 100 s/100 ml or more and 340 s/100 ml or less, and more preferably 120 s/100 ml or more and 340 s/100 ml or less. When the air permeability is 50 s/100 ml or more, a network structure of continuous pores is obtained, and thus a separator having high strength can be obtained. When the air permeability is 300 s/100 ml or less, a structure having pores connected to each other is obtained, and thus high liquid absorbency is obtained.

The total thickness of the electricity storage device separator is preferably 5 $\mu$m or more and 30 $\mu$m or less, and more preferably 5 $\mu$m or more and 27 $\mu$m or less. When the thickness is 5 $\mu$m or more, heat resistance of the electricity storage device separator is improved. When the thickness is 30 $\mu$m or less, energy density of the electricity storage device can be increased.

The lower limit value of puncture strength of the electricity storage device separator, when the thickness of the separator is converted to 14 $\mu$m, is 0.981 N/14 $\mu$m [100 gf/14 $\mu$m] or more, for example, 1.28 N/14 $\mu$m [130 gf/14 $\mu$m] or more or 1.57 N/14 $\mu$m [160 gf/14 $\mu$m] or more. The upper limit value of puncture strength of a multilayer structure is, when the thickness of the entire multilayer structure is converted to 14 $\mu$m, 5.39 N/14 $\mu$m [550 gf/14 $\mu$m] or less, for example, 4.90 N/14 $\mu$m [500 gf/14 [$\mu$m] or less, or 4.71 N/14 $\mu$m [480 gf/14 $\mu$m] or less.

The tensile strength in the MD of the electricity storage device separator is 500 kg/cm$^2$ or more and 2000 kg/cm$^2$ or less, preferably 800 kg/cm$^2$ or more and 1800 kg/cm$^2$ or less, and more preferably 1000 kg/cm$^2$ or more and 1600 kg/cm$^2$ or less. When the MD tensile strength is 500 kg/cm$^2$ or more, strength in the MD is increased by the strong orientation in the separator, and the manufacture of a wound body around which electrodes and the separator are wound is facilitated. The tensile strength is 2000 kg/cm$^2$ or less. When 2000 kg/cm$^2$ or less, cracks are less likely to occur in the MD, and the problem of the separator being torn lengthwise (in the MD) during handling is less likely to occur.

The ratio of tensile strength in the MD to tensile strength in the TD (also referred to as "MD/TD strength ratio") of the electricity storage device separator is 1.5 or greater and 30 or less, preferably 6.0 or greater and 20 or less, and more preferably 8.0 or greater and 15 or less. When the MD/TD strength ratio is 1.5 or greater, strength in the MD is increased by the strong orientation of the crystals in the resin component constituting the separator. The manufacture of a wound body around which electrodes and the separator are wound is thereby facilitated. In addition, when the MD/TD strength ratio is 1.5 or greater, heat shrinkage rate in the TD can be relatively decreased, and thus resistance to a short circuit due to heat shrinkage in the TD during cell winding is increased. The upper limit of the MD/TD strength ratio is not particularly limited, but is preferably 30 or less, preferably 20 or less, and preferably 15 or less. When the MD/TD strength ratio is 30 or less, cracks are less likely to occur in the MD, and the problem of the separator being torn lengthwise (in the MD) during unwinding, winding, and other web handling of the separator in the cell production steps is less likely to occur.

The tortuosity of the electricity storage device separator is preferably 1.2 or greater and 3.0 or less, more preferably 1.4 or greater and 2.5 or less, and more preferably 1.5 or greater and 2.0 or less. It is considered that wettability of inorganic filler surfaces with an electrolytic solution and tortuosity are main controlling factors for liquid absorbency of the microporous membrane. When the tortuosity is 3.0 or less, it is considered that the path that the electrolytic solution travels from the surface of the microporous membrane to a surface on the opposite side is shortened, and thus high liquid absorbency is obtained. When the tortuosity is 1.2 or greater, high voltage resistance can be maintained, high puncture strength can be maintained, and safety of a cell can be improved.

The moisture content of the electricity storage device separator is preferably 1000 ppm or less. By having the moisture content of the electricity storage device separator at 1000 ppm or less, adverse effects on cell characteristics are reduced.

<<Manufacturing method for electricity storage device separator>>

A manufacturing method of a microporous membrane (A) containing an inorganic filler and a polyolefin resin generally comprises a melt extrusion step of mixing and dispersing a polyolefin resin and an inorganic filler and melt-extruding the mixture to obtain a resin film and a pore formation step of opening pores to porosify in the obtained resin sheet, and further optionally comprise a stretching step and a heat treatment step. Manufacturing methods of the microporous membrane (A) are categorized into dry methods that do not use a solvent in the pore formation step and wet methods that use a solvent.

Examples of dry methods include a method of mixing and dispersing a polyolefin resin and an inorganic filler in a dry state and melt-kneading to extrude the mixture, and then peeling at the polyolefin resin crystal interface by heat treatment and stretching; and a method of melt-kneading a polyolefin resin and an inorganic filler to mold the mixture into sheet form, and then peeling at the interface between the polyolefin resin and the inorganic filler by stretching.

Examples of wet methods include a method of mixing and dispersing a polyolefin resin composition and an inorganic filler, adding a pore-forming material in a liquid state and melt-kneading the mixture to mold into sheet form, stretching the sheet as needed, and then extracting the pore-forming material; and a method of dissolving a polyolefin resin composition in an organic solvent, then immersing the mixture in a poor solvent having low solubility for the polyolefin resin to solidify the polyolefin resin and remove the organic solvent simultaneously.

A single-screw extruder or a twin-screw extruder can be used in melt-kneading the polyolefin resin composition, and in addition to these, for example, a kneader, a Labo-Plastomill, a kneading roll, or a Banbury mixer can be used.

The polyolefin resin composition may optionally contain resins other than a polyolefin resins and additives in accordance with the manufacturing method of the microporous membrane (A) or physical properties of the intended microporous membrane (A). Examples of additives include pore-forming materials, fluorine-based fluid modifiers, waxes, crystal nucleating agents, anti-oxidants, metal soaps such as aliphatic carboxylic acid metal salt, ultraviolet absorbers, photo stabilizers, antistatic agents, antifogging agents, and dyes and pigments. Examples of pore-forming materials include plasticizers, inorganic filling materials, and combinations thereof.

Examples of plasticizers include hydrocarbons such as liquid paraffin and paraffin wax; esters such as dioctyl phthalate and dibutyl phthalate; and higher alcohols such as oleyl alcohol and stearyl alcohol.

A stretching step may be carried out during the pore formation step, or before or after the pore formation step. Uniaxial stretching and biaxial stretching can both be used as the stretching treatment. Although not limited, uniaxial stretching is preferable from the viewpoint of manufacturing cost when using a dry method. By using a lamellar pore opening method via uniaxial stretching, the electricity storage device separator of the present disclosure, which has high liquid absorbency and high strength (more specifically, for example, high puncture strength) as described below, can be more easily manufactured. This will be explained hereinafter. The pore opening method is generally a method of obtaining a precursor (original film) having lamellar crystals oriented by melt extrusion, and cold-stretching and then hot-stretching the precursor to open pores between the lamellar crystals. The present inventors have intensively studied lamellar pore opening methods to achieve both high liquid absorbency and high strength thereby, and as a result, have discovered that preferably, by lowering the extruder temperature of the microporous membrane (A) comprising an inorganic filler acting as the inner layer and increasing airflow of the airing immediately after extrusion for effective cooling, the degree of crystal orientation can be increased even though heat capacity of an inorganic filler is generally high. Consequently, a highly open pore structure of the microporous membrane (A) can be achieved, and high liquid absorbency can be achieved. Further, by opening pores at a low stretching ratio while using a highly oriented original film, high puncture strength can be achieved while maintaining high resin density. Consequently, high liquid absorbency can be obtained while maintaining strength even in separators having a single layer of the microporous membrane (A).

In order to suppress shrinkage of the microporous film, a heat treatment step may be carried out for the purpose of heat-setting after the stretching step or after the pore formation step. The heat treatment step may comprise a stretching operation carried out in an atmosphere at a predetermined temperature and a predetermined stretching rate for the purpose of adjusting physical properties, and/or a relaxation operation carried out in an atmosphere at a predetermined temperature and a predetermined relaxation rate for the purpose of reducing elongation stress. The relaxation operation may be carried out after the stretching operation. These heat treatment steps can be carried out using a tenter or a roll stretcher.

The microporous membrane (B) may be laminated on one side or both sides of the microporous membrane (A). Examples of a method of laminating the microporous membrane (B) include a coextrusion method and a lamination method. In the coextrusion method, the resin compositions of the layers are simultaneously coextruded to form a film, the resulting multilayer original film is stretched and subjected to pore opening to produce a multilayer microporous membrane. In the lamination method, each layer is formed separately by extrusion film formation to obtain an original film. The resulting original films are laminated to obtain a multilayer original film, the resulting multilayer original film can be stretched and subjected to pore opening to produce a multilayer microporous membrane. The coextrusion method is preferable in that the microporous membrane (A) can be supported with a layer not containing an inorganic filler, and thus film formation stability is improved and inorganic filler content can be increased.

< <Electricity storage device>>

An electricity storage device comprises a positive electrode, a negative electrode, and the electricity storage device separator of the present disclosure described above. The electricity storage device separator is laminated between the positive electrode and the negative electrode.

The electricity storage device is not limited, and examples include lithium secondary cells, lithium-ion secondary cells, sodium secondary cells, sodium-ion secondary cells, magnesium secondary cells, magnesium-ion secondary cells, calcium secondary cells, calcium-ion secondary cells, aluminum secondary cells, aluminum-ion secondary cells, nickel-hydrogen cells, nickel-cadmium cells, electric double layer capacitors, lithium-ion capacitors, redox flow cells, lithium-sulfur cells, lithium-air cells, and zinc-air cells. Among these, from the viewpoint of practicality, lithium secondary cells, lithium-ion secondary cells, nickel-hydrogen cells, and lithium-ion capacitors are preferable, and lithium-ion secondary cells are more preferable.

The electricity storage device can be produced, for example, by stacking, and winding around as needed, a positive electrode and a negative electrode via the separator described above to form a laminated electrode body or a wound electrode body, then packing the electrode body into an outer packaging, connecting the positive and negative electrodes and the positive and negative terminals on the outer packaging via lead bodies, further injecting a nonaqueous solvent such as a chain or cyclic carbonate and a nonaqueous electrolytic solution comprising an electrolyte such as a lithium salt into the outer packaging, and then sealing the outer packaging.

Example

S

<<Measurement and evaluation method>>

[Melt flow rate (MFR)]

The MFR of the thermoplastic resin was measured (in units of g/10 min) under the conditions of a temperature of 230°C and a load of 2.16 kg, in accordance with JIS K 7210. The MFR of polypropylene was measured under the conditions of a temperature of 230°C and a load of 2.16 kg, in accordance with JIS K 7210. The MFR of polyethylene was measured under the conditions of a temperature of 190°C and a load of 2.16 kg, in accordance with JIS K 7210. The MFR of the elastomer was measured under the conditions of a temperature of 230°C and a load of 2.16 kg, in accordance with JIS K 7210.

The MFR of the microporous membrane (A), when removed from the laminated sheet for measurement, was measured as follows. Specifically, after adhesive tape was applied to the outer layer of the microporous membrane (B) on the surface of the microporous sheet having a laminated structure and peeled off to remove the microporous membrane (A), measurement was carried under the conditions of a temperature of 230°C and a load of 2.16 kg, in accordance with JIS K 7210.

[Area ratios of inorganic filler, voids, and resin]

Treatment before electron microscope observation:

A separator was placed in a sealed container present with ruthenium tetroxide (manufactured by Rare Metallic Co., Ltd.) and dyed by steaming for 4 h to produce a ruthenium-dyed separator. 10.6 mL of epoxy resin (Quetol 812, manufactured by Nisshin EM Co., Ltd.), 9.4 mL of a curing agent (methyl nadic anhydride (MNA), manufactured by Nisshin EM Co., Ltd.), and 0.34 mL of a reaction accelerator (DMP-30, 2,4,6-tris(dimethyl amino methyl)phenol, manufactured by Nisshin EM Co., Ltd.) were mixed to a sufficiently stirred mixed liquid, the above separator dyed with ruthenium was immersed therein and placed in a reduced pressure environment so that the fine pores of the separator dyed with ruthenium were sufficiently impregnated with the mixed liquid. The separator dyed with ruthenium was then embedded in an epoxy resin by curing at 60°C for 12 h or more. After embedding in the epoxy resin, a cross section was roughly processed with a razor, and then processed by cross section milling using an ion milling apparatus (E3500 Plus, manufactured by Hitachi High-Tech Corporation) to prepare a cross-sectional sample. The cross section was in the ND-MD plane. The above cross-sectional sample was fixed to a SEM sample stage for cross-sectional observation with a conductive adhesive (carbon-based) and dried, osmium coating as a conductive treatment was carried out using an osmium coater (HPC-30W, manufactured by Vacuum Device) under the conditions of an applied voltage adjustment knob setting of 4.5 and a discharge time of 0.5 s to obtain a microscopy sample.

Acquisition of electron microscope image:

The observation field of the above microscopy sample in SEM (S-4800, manufactured by Hitachi High-Tech Corporation), under the conditions of an accelerating voltage of 1.0 kV, an emission current of 10 $\mu$A, a probe current of High, a detector of Upper+LA-BSE100, a pixel resolution of about 10 nm/pix, and a working distance of 2.0 mm, was determined so that the entire region of the layer containing an inorganic filler in the thickness direction was framed in the observation field, and the contrast was set as high as possible without saturating the brightness to acquire an electron microscope image. If the thickness of the layer containing an inorganic filler was larger than the observation field, the observation field was determined so that the layer containing an inorganic filler was entirely included in the observation field, and the contrast was set as high as possible without saturating the brightness to acquire an electron microscope image.

Image processing (calculation of void ratio and inorganic filler ratio):

In the above electron microscope image, a region that included 80% or greater of the thickness of the layer containing an inorganic filler, did not include regions other than the layer containing an inorganic filler, and was as wide as possible with a width of 20 $\mu$m or more in the horizontal direction was selected and defined as the image processing region. If the thickness of the layer containing an inorganic filler was larger than the observation field, the entire observation field was defined as the image processing region. The free software ImageJ was used for image processing. A brightness histogram of the above image processing region was displayed, as shown in Fig. 1, the difference in brightness between two points (indicated by arrows in Fig. 1) that are the maximum values of the two closest peaks among three peaks, and this value was defined as CD. A smoothed image was produced using Mean Shift Filter (an open source plug-in developed by Kai-Uwe Barthel of FHTW-Berlin). At this time, the Spatial radius, which is an argument of the Mean Shift Filter, was set to 3, and the Color distance was set to the value of the above CD. Two non-zero thresholds were determined for the above smoothed image using Multi Otsu Threshold (an open source plug-in developed using the algorithm of NPL 1). The smaller of the two thresholds was set as threshold A, and the larger one was set as threshold B. In the smoothed image, pixels having a brightness less than the threshold A were regarded as void, pixels having a brightness at the threshold A or higher and lower than the threshold B were regarded as polyolefin, pixels having a brightness at the threshold B or higher were regarded as inorganic filler, and the number of pixels of void with respect to the total number of pixels was defined as the occupying area ratio of voids. The occupying area ratio of polyolefin and the occupying area ratio of inorganic filler were similarly calculated. Electron microscope images from 5 or more fields of view were used to calculate the above occupying area ratios of voids, the above occupying area ratios of polyolefin, and the above occupying area ratios of inorganic filler, and the average values thereof were defined as the void ratio, the polyolefin ratio, and the inorganic filler ratio, respectively.

Image processing (calculation of average particle size of inorganic filler):

(1) A binarized image for the smoothed image was produced, where the brightness of pixels having a brightness lower than the threshold B was set to 0 and the brightness of pixels having a brightness at the threshold B or higher was set to 255.

(2) A thickness analysis on BoneJ (an open source plug-in described in NPL 2) using the free software ImageJ was executed, the average value of Tb. Th in the Results window was read, and the numerical value converted to length in real space, in consideration of pixel size of the electron microscope image, was taken as the average particle size of the inorganic filler.

[Average pore size of voids]

Image processing (calculation of void size):

The smoothed image above was binarized by setting the brightness of pixels having a brightness lower than the threshold A to 0 and setting the brightness of pixels having a brightness at the threshold A or higher to 255. A thickness analysis on BoneJ (an open source plug-in described in NPL 2) was executed, the numerical value Tb. Th mean in the Results window was read, and the numerical value converted to length in real space was taken as the average pore size of voids.

[Thickness ($\mu$m)]

The thickness ($\mu$m) of the separator was measured at room temperature of $23 \pm 2°C$ using a Digimatic Indicator IDC 112 manufactured by Mitutoyo Corporation. The thickness of the inorganic content layer was measured by drawing center lines between the inorganic content layer and the interface or another layer obtained by SEM image and measuring the length between the lines.

[Air permeability resistance (s/100 ml)]

The air permeability resistance (s/100 ml) of the separator was measured using a Gurley permeability tester in accordance with JIS P-8117.

[Puncture strength]

A needle having a hemispherical tip with a radius of 0.5 mm was prepared, a separator was interposed between two plates having an opening with a diameter (dia.) of 11 mm, and the needle, separator, and plates were set. A puncture test was carried out under the conditions of a needle-tip curvature radius of 0.5 mm, a separator retention plate opening diameter of 11 mm, and a puncture speed of 25 mm/min using an "MX2-50N" manufactured by Imada Co., Ltd. The needle and the separator were brought into contact, and the maximum puncture load (i.e., puncture strength (gf)) was measured.

[MD tensile strength, TD tensile strength, and MD/TD strength ratio]

The tensile strength of the separator was measured by using a tensile tester (Model TG-1kN, manufactured by Minebea Co., Ltd.), setting the sample length to 35 mm before the test, and pulling the sample at a speed of 100 mm/min. The value obtained by dividing the strength (tensile load value) when the sample yielded or the strength (tensile load value) when the sample severed (ruptured) before yielding by the cross-sectional area of the test piece was taken as the tensile strength. The tensile strength was measured for each of the MD and TD of the separator. The MD/TD strength ratio was determined by dividing the MD tensile strength by the TD tensile strength.

[MD heat shrinkage and TD heat shrinkage]

For the heat shrinkage rate, a separator was cut into 5 cm squares, marked at 9 locations at 2 cm intervals, and wrapped in paper. The marked samples were heat-treated at a temperature of 130 °C for 1 h, subsequently cooled to room temperature, and then measured for lengths in the MD and TD at three locations each to determine the shrinkage rate.

[Tortuosity]

The average pore size of the electricity storage device separator can be measured by a gas-liquid method. Specifically, it is known that a fluid inside a capillary follows Knudsen flow when the mean free path of the fluid is larger than the pore size of the capillary, and follows Poiseuille flow when smaller. Thus, in air permeability measurements of the separator, it is assumed that the flow of air follows Knudsen flow, and the flow of water follows Poiseuille flow.

In this case, the average pore size d ($\mu$m) and tortuosity $\tau a$ (dimensionless) of a porous membrane was determined from the permeation rate constant of air $R_{gas}$ ($m^3/(m^2 \cdot s \cdot Pa)$), permeation rate constant of water $R_{liq}$

($m^3/(m^2 \cdot s \cdot Pa)$), molecular speed of air $v$ (m/s), viscosity of water $\eta$ (Pa·s), standard pressure Ps (= 101325 Pa), porosity $\varepsilon$ (%), and membrane thickness L ($\mu$m), using the following formula.

$$d = 2v \times (R_{liq}/R_{gas}) \times (16\eta/3Ps) \times 10^6$$

$$\tau a = (d \times (\varepsilon/100) \times v/(3L \times Ps \times R_{gas}))^{1/2}$$

wherein $R_{gas}$ was determined from air permeability (s) using the following formula.

$$R_{gas} = 0.0001/(\text{air permeability} \times (6.424 \times 10^{-4}) \times (0.01276 \times 101325))$$

In addition, $R_{liq}$ was determined from water permeability ($m^3/(m^2 \cdot s \cdot Pa)$) using the following formula.

$$R_{liq} = \text{water permeability}/100$$

The water permeability was determined as follows. A separator preliminarily soaked in ethanol was set in a liquid-permeable cell made of stainless steel having a diameter of 41 mm. After the ethanol was washed from the separator with water, water was allowed to permeate the separator at a pressure difference of about 50000 Pa. From the water permeation amount ($cm^3$) for 120 s, the water permeation amount per unit time per unit pressure per unit area was calculated and defined as the water permeability. Further, $v$ was determined from the gas constant R (= 8.314 J/(K·mol)), absolute temperature T (K), the circular constant $\pi$, and the average molecular weight of air M (= $2.896 \times 10^{-2}$ kg/mol) using the following formula.

$$v = ((8R \times T)/(\pi \times M))^{1/2}$$

[Moisture content]

The separator was cut so as to be in the range of 0.15 g to 0.20 g, and pretreated (left standing) in an environment of 23°C and a relative humidity of 40% for 12 h. The weight thereof was then measured and defined as the sample weight (g). The moisture weight ($\mu$g) of the sample after pretreatment was measured using a Karl Fischer apparatus. The heat vaporization conditions during measurement were set to 150°C for 10 min. Hydranal Coulomat CG-K (manufactured by Sigma-Aldrich) was used as a cathode reagent, and Hydranal Coulomat AK (manufactured by Sigma-Aldrich) was used as an anode reagent.

$$\text{Moisture amount (ppm)} = \text{moisture weight } (\mu g)/\text{sample weight (g)}$$

[Evaluation method of drop liquid absorbency (s)]

For drop liquid absorbency, a separator was cut into 5 cm squares, and each was placed on a smooth plate inside an argon box. 5 $\mu$l of DMC was measured into a microsyringe and dropped onto the separator surface, and the time until the droplet disappeared was measured to determine the drop liquid absorbency.

[Evaluation method of Fe (ppm) (abrasion resistance)]

About 0.2 g of the separator was weighed in a sealed decomposition container made of fluororesin, 5 mL of high-purity nitric acid was added thereto, and after heating at 200°C for 20 min with a microwave decomposition apparatus (trade name "ETHOS TC", machine number 125571, manufactured by Milestone General K.K.), the volume was adjusted to 50 mL with ultrapure water. Measurement was then carried out with an ICP mass spectrometer (trade name "X-series X7 ICP-MS", machine number X0126, manufactured by Thermo Fisher Scientific Inc.).

<<Example 1>>

[Production of composition comprising polyolefin resin and inorganic filler]

Polyethylene resin (PE, MFR = 0.31) and surface-treated barium sulfate having an average particle size of 500 nm (1 part by weight of sodium stearate with respect to 100 parts by weight of barium sulfate was used for surface treatment) were dry-blended at a weight ratio of PE:BaSO4 = 20:80 ( wt%), and then melt-kneaded using a twin-screw extruder HK-25D (manufactured by Parker Corporation, L/D = 41). To suppress decomposition and denaturation of the resin as much as possible, in a completely sealed state from the resin input hopper port to the raw material tank, nitrogen was continuously flowed from the hopper bottom to control oxygen concentration near the raw material input port to 50 ppm or less. In addition, all vents were completely sealed to eliminate air leakage into the cylinder. This oxygen concentration reduction effect significantly suppressed polymer decomposition and denaturation even at high temperatures. Charging barium sulfate with a twin-screw feeder further allowed barium sulfate to be finely dispersed. After melt-kneading, the strand was pulled through a die (2 holes), cooled in a water-cooled bath, and then cut using a pelletizer to obtain pellets.

[Production of microporous membrane (triple-layer)]

A laminated sheet was formed by coextrusion. Polypropylene resin (PP, MFR = 0.51) was melted in a 32 mm $\phi$ twin co-directional screw extruder and supplied to a circular die using a gear pump. The above pellets comprising barium sulfate were melted in a 32 mm $\phi$ single-screw extruder and supplied to a circular die using a gear pump. The compositions melt-kneaded by each extruder were extruded into sheet form with a circular die capable of coextruding two types and three layers, and the molten polymer was cooled with blown air and then wound into a roll. The polypropylene resin was extruded at a kneading temperature of 230°C and an extrusion rate of 2.4 kg/hr from the outer layer (two layers on the surface) of a circular die set at a temperature of 230°C. The pellets comprising barium sulfate were extruded at a kneading temperature of 230°C and an extrusion rate of 1.2 kg/hr in terms of polyethylene resin from the inner layer (intermediate layer) of a circular die set at a temperature of 220°C. Immediately after extrusion, the extruded precursor (original film) was cooled by airing at an airflow rate of 3.6 m$^3$/min per $\Phi$300 mm width. The thickness of the original film after cooling was 16 $\mu$m. Subsequently, the original film was annealed at 127°C for 15 min. The annealed original film was then cold-stretched to 10% at room temperature, the film after cold stretching was then hot-stretched to 120% at 115°C, and the film after hot stretching was relaxed to 92% at 125°C to form micropores. After the above stretching and pore opening, the physical properties of the obtained microporous membrane were measured. The results are shown in Table 1.

<<Example 9>>

[Production of microporous membrane (single-layer)]

The above pellets comprising barium sulfate were melted in a 32 mm $\phi$ single-screw extruder and supplied to a circular die using a gear pump. The composition melt-kneaded by the extruder was extruded into sheet form with a circular die, and the molten polymer was cooled with blown air and then wound into a roll. At this time, the pellets comprising barium sulfate were extruded at a kneading temperature of 230°C and an extrusion rate of 1.2 kg/hr in terms of polypropylene resin from the inner layer (intermediate layer) of a circular die set at a temperature of 230°C. Immediately after extrusion, the extruded precursor (original film) was cooled by airing at an airflow rate of 3.6 m$^3$/min per $\Phi$300 mm width. The thickness of the original film after cooling was 16 $\mu$m. Subsequently, the original film was annealed at 127°C for 15 min. The annealed original film was then cold-stretched to 10% at room temperature, the film after cold stretching was then hot-stretched to 110% at 115°C, and the film after hot stretching was relaxed to 92% at 125°C to form micropores. After the above stretching and pore opening, the physical properties of the obtained microporous membrane were measured. The results are shown in Table 1.

<<Examples 2 to 8 and 10 to 15 and Comparative Examples 1 to 8>>

The raw materials, film formation conditions, or separator physical properties were changed as indicated in Tables 1 and 2, and the same method as in Example 1 in the case of three-layer or the same method as in Example 9 in the case of single-layer was followed to obtain a microporous membrane, and the resulting microporous membrane was evaluated. The layer structure was adjusted by changing the ratio of extrusion amounts.

Table 1.

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Inner layer raw material | Resin | Resin type | PE | PE | PE | PE | PE | PE | PP | PE | PE | PE | PE | PP |
| | | MFR | 0.31 | 0.31 | 0.31 | 0.31 | 0.31 | 0.31 | 0.51 | 0.31 | 0.31 | 0.31 | 0.31 | 0.51 |
| | | Additive amount (wt%) | 20 | 50 | 40 | 18 | 70 | 20 | 20 | 20 | 40 | 20 | 40 | 40 |
| | Inorganic filler | Particle type | barium sulfate | barium sulfate | barium sulfate | alumina | barium sulfate | barium sulfate | barium sulfate | barium sulfate | barium sulfate | alumina | barium sulfate | barium sulfate |
| | | Particle size (nm) | 360 | 250 | 360 | 360 | 150 | 360 | 360 | 250 | 360 | 360 | 360 | 360 |
| | | Additive amount (wt%) | 80 | 50 | 60 | 82 | 30 | 80 | 80 | 80 | 60 | 80 | 60 | 60 |
| | | Mohs hardness | 4.5 | 4.5 | 4.5 | 9 | 4.5 | 4.5 | 4.5 | 4.5 | 4.5 | 4.5 | 4.5 | 4.5 |
| | MFR of resin composition | | 0.43 | 0.35 | 0.32 | 0.15 | 0.25 | 0.43 | 0.43 | 0.43 | 0.32 | 0.15 | 0.32 | 0.38 |
| Outer layer raw material | Resin | Resin type | PP | PP | PP | PP | PP | PP | PP | PP | none | none | none | PP |
| | | MFR | 0.51 | 0.51 | 1.7 | 0.51 | 0.51 | 0.51 | 0.51 | 0.51 | - | - | - | 0.51 |
| | | Additive amount (wt%) | 100 | 100 | 100 | 100 | 100 | 100 | 100 | 100 | - | - | - | 100 |
| Laminate structure | Layer configuration (volume ratio) | | 1/2/1 | 1/2/1 | 1/2/1 | 1/2/1 | 1/2/1 | 1/2/1 | 1/2/1 | 1/2/1 | - | - | - | 1/2/1 |

14

(continued)

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Manufacturing condition | Airflow rate (m³/min φ310 mm) | 3.6 | 4.1 | 4.0 | 4.7 | 3.6 | 3.6 | 3.9 | 4.1 | 4.1 | 4.6 | 4.1 | 3.9 |
| | Outer layer extruder temperature (°C) | 230 | 230 | 230 | 230 | 230 | 230 | 230 | 230 | 230 | 230 | 230 | 230 |
| | Inner layer extruder temperature (°C) | 220 | 220 | 220 | 220 | 220 | 220 | 220 | 220 | - | - | - | 220 |
| | Heat stretching temperature (°C) | 115 | 130 | 115 | 115 | 115 | 115 | 110 | 130 | 115 | 115 | 115 | 110 |
| | Heat stretching ratio (%) | 120 | 110 | 110 | 110 | 110 | 120 | 110 | 110 | 110 | 110 | 110 | 110 |
| Inner layer physical property | ND-MD average pore size (μm) | 0.84 | 0.51 | 0.88 | 0.70 | 0.45 | 0.84 | 0.27 | 0.55 | 0.82 | 0.71 | 0.82 | 0.25 |
| | MFR of inner layer | 0.43 | 0.35 | 0.32 | 0.15 | 0.25 | 0.43 | 0.43 | 0.43 | 0.32 | 0.15 | 0.32 | 0.38 |

(continued)

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Separator property and evaluation | Membrane thickness ($\mu$m) | 15.2 | 14.2 | 13 | 12.5 | 12.7 | 15.2 | 13.9 | 14.3 | 14.2 | 12.9 | 12.9 | 14 |
| | Porosity (%) | 54 | 49 | 51 | 49 | 49 | 54 | 46 | 49 | 46 | 47 | 57 | 47 |
| | Air permeability (s/100 cc) | 130 | 165 | 188 | 191 | 177 | 130 | 237 | 160 | 110 | 109 | 112 | 240 |
| | Tortuosity | 1.64 | 1.90 | 1.81 | 1.66 | 2.10 | 1.64 | 2.32 | 1.96 | 1.38 | 1.44 | 1.62 | 2.35 |
| | Moisture content (ppm) | 198 | 223 | 234 | 420 | 188 | 199 | 198 | 205 | 203 | 421 | 188 | 210 |
| | MD heat shrinkage 130 °C (%) | 31.3 | 17.9 | 7.5 | 6.7 | 15.0 | 31.3 | 26.3 | 17.9 | 7.5 | 6.7 | 17.5 | 15.0 |
| | TD heat shrinkage 130 °C (%) | -0.4 | -0.4 | 0.0 | -1.3 | -1.3 | -0.4 | -0.8 | -0.4 | 0.0 | -1.3 | -1.3 | -0.8 |
| | Puncture strength (gf/14 $\mu$m) | 156 | 180 | 207 | 197 | 194 | 169 | 185 | 167 | 170 | 169 | 181 | 199 |
| | MD tensile strength (kg/cm$^2$) | 930 | 1417 | 1650 | 1140 | 1780 | 930 | 1114 | 1086 | 1580 | 980 | 1410 | 1670 |
| | TD tensile strength (kg/cm$^2$) | 94 | 121 | 130 | 108 | 141 | 94 | 105 | 106 | 131 | 100 | 130 | 112 |
| | MD/TD strength ratio | 9.9 | 11.7 | 12.7 | 10.6 | 12.6 | 9.9 | 10.6 | 10.2 | 12.1 | 9.8 | 10.8 | 14.9 |
| | Drop liquid absorbency (s) | 93.0 | 135 | 130 | 105 | 160 | 93.0 | 151 | 97 | 89 | 88 | 100 | 155 |
| | Fe (ppm) (abrasion resistance) | 10 | 10 | 9 | 200 | 8 | 10 | 9 | 10 | 1000 | 2000 | 1000 | 9 |

EP 4 439 845 B1

16

Table 2.

| | | | Example 13 | Example 14 | Example 15 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|
| Inner layer raw material | Resin | Resin type | PE | PE | PE | PP | PP | PP | PP | PP | PP | PP | PE |
| | | MFR | 0.31 | 1.1 | 0.31 | 0.51 | 0.31 | 0.31 | 5.1 | 5.1 | 0.2 | 0.51 | 0.31 |
| | | Additive amount (wt%) | 70 | 20 | 12 | 100 | 35 | 7 | 40 | 40 | 7 | 85 | 20 |
| | Inorganic filler | Particle type | barium sulfate | barium sulfate | barium sulfate | none | barium sulfate | barium sulfate | barium sulfate | barium sulfate | barium sulfate | barium sulfate | barium sulfate |
| | | Particle size (nm) | 150 | 600 | 580 | - | 120 | 360 | 360 | 360 | 360 | 360 | 360 |
| | | Additive amount (wt%) | 30 | 80 | 88 | 0 | 65 | 93 | 60 | 60 | 93 | 15 | 80 |
| | | Mohs hardness | 4.5 | 4.5 | 4.5 | - | 4.5 | 4.5 | 4.5 | 4.5 | 4.5 | 4.5 | 4.5 |
| | MFR of resin composition | | 0.35 | 0.8 | 0.55 | 0.51 | 0.22 | 0.16 | 5.2 | 5.2 | 0.03 | 0.48 | 0.43 |
| Outer layer raw material | Resin | Resin type | nonc | PP | PP | PP | nonc | nonc | PP | PP | nonc | nonc | nonc |
| | | MFR | - | 0.91 | 0.51 | 0.51 | - | - | 0.51 | 0.51 | - | - | - |
| | | Additive amount (wt%) | - | 100 | 100 | 100 | - | - | 100 | 100 | - | - | - |
| Laminate structure | Layer configuration (volume ratio) | | - | 1/1/1 | 1/1/1 | 1/1/1 | - | - | 1/2/1 | 1/2/1 | - | - | - |

| | | Example 13 | Example 14 | Example 15 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| Manufacturing condition | Airflow rate (m³/min φ310 mm) | 3.5 | 3.6 | 4.2 | 2.5 | 6.5 | 3.6 | 4.0 | 4.0 | 3.6 | 3.5 | 2.5 |
| | Outer layer extruder temperature (°C) | 230 | 230 | 250 | 220 | 215 | 230 | 230 | 230 | 230 | 230 | 230 |
| | Inner layer extruder temperature (°C) | - | 220 | 230 | 220 | - | - | 220 | 220 | - | - | - |
| | Heat stretching temperature (°C) | 115 | 115 | 115 | 115 | 115 | 115 | 115 | 115 | 115 | 110 | 115 |
| | Heat stretching ratio (%) | 110 | 110 | 110 | 110 | 105 | 120 | 110 | 110 | 120 | 110 | 120 |
| Inner layer physical | ND-MD average pore size (μm) | 0.42 | 1.20 | 1.21 | 0.24 | 0.09 | 1.55 | 0.22 | 0.22 | 1.54 | 0.55 | 0.90 |
| property | MFR of inner layer | 0.35 | 0.8 | 0.55 | 0.51 | 0.22 | 0.16 | 5.2 | 5.2 | 0.03 | 0.48 | 0.43 |

| | | Example 13 | Example 14 | Example 15 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| Separator property and evaluation | Membrane thickness ($\mu$m) | 12.5 | 12.7 | 16.1 | 12.0 | 14.2 | 12.9 | 14.2 | 14.2 | 15.5 | 14 | 12.1 |
| | Porosity (%) | 45 | 51 | 51 | 48 | 51 | 51 | 48 | 48 | 51 | 48 | 48 |
| | Air permeability (s/100 cc) | 111 | 155 | 100 | 215 | 240 | 65 | 480 | 480 | 205 | 210 | 350 |
| | Tortuosity | 1.47 | 2.01 | 1.16 | 2.62 | 2.6 | 1.5 | 3.16 | 3.16 | 1.41 | 3.10 | 3.1 |
| | Moisture content (ppm) | 246 | 178 | 175 | 100 | 254 | 224 | 199 | 205 | 199 | 211 | 198 |
| | MD heat shrinkage 130 °C (%) | 15.0 | 17.9 | 15.0 | 14.2 | 17.9 | 17.9 | 13.3 | 13.3 | 6.5 | 15.0 | 26.3 |
| | TD heat shrinkage 130 °C (%) | -1.3 | -1.3 | -0.8 | -0.4 | 0.0 | -1.3 | -0.4 | -0.4 | -0.4 | -1.3 | -0.8 |
| | Puncture strength (gf/14 $\mu$m) | 151 | 120 | 95 | 259 | 215 | 44 | 177 | 180 | 48 | 205.0 | 175 |
| | MD tensile strength (kg/cm$^2$) | 1690 | 1122 | 945 | 1819 | 1320 | 625 | 1390 | 1320 | 645 | 1510 | 1310 |
| | TD tensile strength (kg/cm$^2$) | 141 | 109 | 93 | 166 | 117 | 82 | 123 | 123 | 81 | 130 | 115 |
| | MD/TD strength ratio | 12.0 | 10.3 | 10.2 | 11.0 | 11.3 | 7.6 | 11.3 | 10.7 | 8.0 | 11.6 | 11.4 |
| | Drop liquid absorbency (s) | 135 | 120 | 80 | 330 | 255 | 95 | 260 | 260 | 90 | 290 | 380 |
| | Fe (ppm) (abrasion resistance) | 1000 | 10 | 15 | 5 | 2000 | 2000 | 10 | 1100 | 2000 | 50 | 1000 |

EP 4 439 845 B1

Industrial Applicability

The electricity storage device separator of the present disclosure has high liquid absorbency, high strength, and abrasion resistance, and can be suitably used as a separator of an electricity storage device, for example, a lithium-ion secondary cell.

Claims

1. An electricity storage device separator, comprising a microporous membrane (A) containing an inorganic filler and a polyolefin resin, wherein

the microporous membrane (A) has a melt flow rate (MFR) of 0.05 or greater and 5 or less, wherein the MFR is measured under the conditions of a temperature of 230°C and a load of 2.16 kg, in accordance with JIS K 7210, the microporous membrane (A) comprises 20 wt% or greater and less than 100 wt% of the inorganic filler and has an average pore size for pores in a Normal Direction-Machine Direction (ND-MD) cross section of 100 nm or more and 1500 nm or less, wherein the separator has an air permeability of 340 s/100 ml or less, wherein the average pore size is measured by observing a Normal Direction-Machine Direction (ND-MD) cross section of the microporous membrane (A) with a scanning electron microscope (SEM) according to the description, and the air permeability is measured using a Gurley permeability tester in accordance with JIS P-8117, wherein the separator has a tensile strength in Machine Direction (MD) of 500 kg/cm$^2$ or more and 2000 kg/cm$^2$ or less, and the tensile strength in Machine Direction (MD) is measured according to the description, wherein a ratio of tensile strength in Machine Direction (MD) to tensile strength in Transverse Direction (TD) is 1.5 or greater and 30 or less, and the tensile strength in Transverse Direction (TD) is measured according to the description, and wherein the separator has a puncture strength per 14-$\mu$m thickness of 0.981 N/14 $\mu$m [100 gf/14 $\mu$m] or more and 5.39 N/14 $\mu$m [550 gf/14 $\mu$m] or less, and the puncture strength is measured according to the description.

2. The electricity storage device separator according to claim 1, wherein the microporous membrane (A) comprises 30 wt% or greater and 90 wt% or less of the inorganic filler.

3. The electricity storage device separator according to claim 1 or 2, wherein the microporous membrane (A) comprises 60 wt% or greater and 90 wt% or less of the inorganic filler.

4. The electricity storage device separator according to any one of claims 1 to 3, wherein the microporous membrane (A) has an average pore size for pores in a Normal Direction-Machine Direction (ND-MD) cross section of 200 nm or more and 840 nm or less.

5. The electricity storage device separator according to any one of claims 1 to 4, wherein the air permeability is 50 s/100 ml or more and 250 s/100 ml or less.

6. The electricity storage device separator according to any one of claims 1 to 5, wherein the inorganic filler has an average particle size, measured as described in the description, of 60 nm or more and 2000 nm or less.

7. The electricity storage device separator according to any one of claims 1 to 5, having a tortuosity of 1.2 or greater and 3.0 or less, wherein the tortuosity is measured according to the description.

8. The electricity storage device separator according to any one of claims 1 to 7, wherein the electricity storage device separator has a heat shrinkage rate in Transverse Direction (TD) at 130°C of 4% or less, wherein the heat shrinkage rate in Transverse Direction (TD) is measured according to the description.

9. The electricity storage device separator according to any one of claims 1 to 8, wherein the microporous membrane (A) has a thickness of 1 $\mu$m or more and 27 $\mu$m or less, wherein the thickness is measured according to the description.

10. The electricity storage device separator according to any one of claims 1 to 9, having a total thickness of 5 $\mu$m or more and 30 $\mu$m or less, wherein the total thickness is measured according to the description.

11. The electricity storage device separator according to any one of claims 1 to 10, wherein the inorganic filler has a Mohs hardness of 5 or less.

12. The electricity storage device separator according to any one of claims 1 to 11, comprising a microporous membrane (B) containing greater than 50 wt% of a polyolefin resin arranged on both sides on the microporous membrane (A).

**Patentansprüche**

1. Separator für eine Stromspeichervorrichtung, umfassend eine mikroporöse Membran (A), die einen anorganischen Füllstoff und ein Polyolefinharz enthält, wobei

die mikroporöse Membran (A) eine Schmelzfließrate (MFR) von 0,05 oder mehr und 5 oder weniger aufweist, wobei die MFR unter den Bedingungen einer Temperatur von 230°C und einer Last von 2,16 kg gemäß JIS K 7210 gemessen wird,
die mikroporöse Membran (A) 20 Gew.-% oder mehr und weniger als 100 Gew.-% des anorganischen Füllstoffs enthält und eine mittlere Porengröße für Poren in einem Normalrichtung-Maschinenrichtung (ND-MD)-Querschnitt von 100 nm oder mehr und 1500 nm oder weniger aufweist, wobei der Separator eine Luftpermeabilität von 340 s/100 ml oder weniger aufweist, wobei die mittlere Porengröße durch Beobachtung eines Normalrichtung-Maschinenrichtung (ND-MD)-Querschnitts der mikroporösen Membran (A) mit einem Rasterelektronenmikroskop (SEM) gemäß der Beschreibung gemessen wird, und die Luftpermeabilität unter Verwendung eines Gurley-Permeabilitätstesters gemäß JIS P-8117 gemessen wird,
wobei der Separator eine Zugfestigkeit in Maschinenrichtung (MD) von 500 kg/cm$^2$ oder mehr und 2000 kg/cm$^2$ oder weniger aufweist, wobei die Zugfestigkeit in Maschinenrichtung (MD) gemäß der Beschreibung gemessen wird,
wobei ein Verhältnis der Zugfestigkeit in Maschinenrichtung (MD) zur Zugfestigkeit in Querrichtung (TD) 1,5 oder mehr und 30 oder weniger beträgt, wobei die Zugfestigkeit in Querrichtung (TD) gemäß der Beschreibung gemessen wird, und
wobei der Separator eine Durchstoßfestigkeit pro 14-$\mu$m Dicke von 0,981 N/14 $\mu$m [100 gf/14 $\mu$m] oder mehr und 5,39 N/14 $\mu$m [550 gf/14 $\mu$m] oder weniger aufweist, wobei die Durchstoßfestigkeit gemäß der Beschreibung gemessen wird.

2. Separator für eine Stromspeichervorrichtung nach Anspruch 1, wobei die mikroporöse Membran (A) 30 Gew.-% oder mehr und 90 Gew.-% oder weniger des anorganischen Füllstoffs enthält.

3. Separator für eine Stromspeichervorrichtung nach Anspruch 1 oder 2, wobei die mikroporöse Membran (A) 60 Gew.-% oder mehr und 90 Gew.-% oder weniger des anorganischen Füllstoffs enthält.

4. Separator für eine Stromspeichervorrichtung nach einem der Ansprüche 1 bis 3, wobei die mikroporöse Membran (A) eine mittlere Porengröße für Poren in einem Normalrichtung-Maschinenrichtung (ND-MD)-Querschnitt von 200 nm oder mehr und 840 nm oder weniger aufweist.

5. Separator für eine Stromspeichervorrichtung nach einem der Ansprüche 1 bis 4, wobei die Luftpermeabilität 50 s/100 ml oder mehr und 250 s/100 ml oder weniger beträgt.

6. Separator für eine Stromspeichervorrichtung nach einem der Ansprüche 1 bis 5, wobei der anorganische Füllstoff eine mittlere Teilchengröße, gemessen wie in der Beschreibung beschrieben, von 60 nm oder mehr und 2000 nm oder weniger aufweist.

7. Separator für eine Stromspeichervorrichtung nach einem der Ansprüche 1 bis 5, welcher eine Tortuosität von 1,2 oder mehr und 3,0 oder weniger aufweist, wobei die Tortuosität gemäß der Beschreibung gemessen wird.

8. Separator für eine Stromspeichervorrichtung nach einem der Ansprüche 1 bis 7, wobei der Separator für eine Stromspeichervorrichtung einen Wärmeschrumpfungsgrad in Querrichtung (TD) bei 130°C von 4% oder weniger aufweist, wobei der Wärmeschrumpfungsgrad in Querrichtung (TD) gemäß der Beschreibung gemessen wird.

9. Separator für eine Stromspeichervorrichtung nach einem der Ansprüche 1 bis 8, wobei die mikroporöse Membran (A) eine Dicke von 1 $\mu$m oder mehr und 27 $\mu$m oder weniger aufweist, wobei die Dicke gemäß der Beschreibung gemessen wird.

10. Separator für eine Stromspeichervorrichtung nach einem der Ansprüche 1 bis 9, welcher eine Gesamtdicke von 5 μm oder mehr und 30 μm oder weniger aufweist, wobei die Gesamtdicke gemäß der Beschreibung gemessen wird.

11. Separator für eine Stromspeichervorrichtung nach einem der Ansprüche 1 bis 10, wobei der anorganische Füllstoff eine Mohs-Härte von 5 oder weniger aufweist.

12. Separator für eine Stromspeichervorrichtung nach einem der Ansprüche 1 bis 11, umfassend eine mikroporöse Membran (B), die mehr als 50 Gew.-% eines Polyolefinharzes enthält und auf beiden Seiten der mikroporösen Membran (A) angeordnet ist.

**Revendications**

1. Séparateur de dispositif de stockage d'électricité, comprenant une membrane microporeuse (A) contenant une charge inorganique et une résine polyoléfine, dans lequel

   la membrane microporeuse (A) a un indice de fluidité à chaud (MFR) de 0,05 ou plus et de 5 ou moins, dans lequel l'indice de fluidité à chaud (MFR) est mesuré dans les conditions de température de 230°C et de charge de 2,16kg, conformément à la norme JIS K 7210,
   la membrane microporeuse (A) comprend 20 % en poids ou plus et moins de 100 % en poids de charge inorganique et a une taille de pore moyenne pour les pores dans une section transversale Direction Normale - Direction Machine (DN-DM) de 100 nm ou plus et de 1500 nm ou moins, dans lequel le séparateur a une perméabilité à l'air de 340 s/100 ml ou moins, dans lequel la taille de pore moyenne des pores est mesurée en observant la section transversale de la Direction Normale - Direction Machine (DN-DM) de la membrane microporeuse (A) avec un microscope électronique à balayage (MEB) selon la description, et la perméabilité à l'air est mesurée en utilisant un testeur de perméabilité Gurley selon la norme JIS P-8117,
   dans lequel le séparateur présente une résistance à la traction dans la Direction Machine (DM) de 500 kg/cm$^2$ ou plus et 2000 kg/cm$^2$ ou moins, et la résistance à la traction dans la Direction Machine (DM) est mesurée selon la description, dans lequel le rapport de la résistance à la traction dans la Direction Machine (DM) à la résistance à la traction dans la Direction Transverse (DT) est de 1,5 ou plus et de 30 ou moins, et la résistance à la traction dans la Direction Transverse (DT) est mesurée selon la description, et
   dans lequel le séparateur a une résistance à la perforation par 14 μm d'épaisseur de 0,981 N/14 μm [100 gf/14 μm] ou plus et de 5,39 N/14 μm [550 gf/14 μm] ou moins, et la résistance à la perforation est mesurée selon la description.

2. Séparateur de dispositif de stockage d'électricité selon la revendication 1, dans lequel la membrane microporeuse (A) comprend 30 % en poids ou plus et 90 % en poids ou moins de charge inorganique.

3. Séparateur de dispositif de stockage d'électricité selon la revendication 1 ou 2, dans lequel la membrane microporeuse (A) comprend 60 % en poids ou plus et 90 % en poids ou moins de charge inorganique.

4. Séparateur de dispositif de stockage d'électricité selon l'une quelconques des revendications 1 à 3, dans lequel la membrane microporeuse (A) a une taille de pore moyenne pour les pores dans une section transversale dans la Direction Normale - Direction Machine (DN-DM) de 200 nm ou plus et de 840 nm ou moins.

5. Séparateur de dispositif de stockage d'électricité selon l'une quelconques des 1 à 4, dans lequel la perméabilité à l'air est de 50 s/100 ml ou plus et de 250s/100 ml ou moins.

6. Séparateur de dispositif de stockage d'électricité selon l'une quelconques des revendications 1 à 5, dans lequel la charge inorganique a une taille de particules moyenne, mesurée telle que décrit dans la description, de 60 nm ou plus et de 2000 nm ou moins.

7. Séparateur de dispositif de stockage d'électricité selon l'une quelconques des revendications 1 à 5, ayant une tortuosité de 1,2 ou plus et de 3,0 ou moins, dans lequel la tortuosité est mesurée selon la description.

8. Séparateur de dispositif de stockage d'électricité selon l'une quelconques des revendications 1 à 7, dans lequel le séparateur de dispositif de stockage d'électricité a un taux de retrait thermique dans la Direction Transverse (DT) à 130°C de 4 % ou moins, dans lequel le taux de retrait thermique dans la Direction Transverse (DT) est mesuré selon la description.

9. Séparateur de dispositif de stockage d'électricité selon l'une quelconques des revendications 1 à 8, dans lequel la membrane microporeuse (A) a une épaisseur de 1 μm ou plus et de 27 μm ou moins dans lequel l'épaisseur est mesurée selon la description.

10. Séparateur de dispositif de stockage d'électricité selon l'une quelconques des revendications 1 à 9, ayant une épaisseur totale de 5 μm ou plus et de 30 μm ou moins, dans lequel l'épaisseur totale est mesurée selon la description.

11. Séparateur de dispositif de stockage d'électricité selon l'une quelconques des revendications 1 à 10, dans lequel la charge inorganique a une dureté Mohs de 5 ou moins.

12. Séparateur de dispositif de stockage d'électricité selon l'une quelconques des revendications 1 à 11, comprenant une membrane microporeuse (B) contenant plus de 50% en poids d'une résine polyoléfine répartie sur les deux côtés de la membrane microporeuse (A).

# Fig. 1

Difference
in brightness: CD

0                                                                    255

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005071979 A
- JP 2012020437 A
- US 2010021822 A1

**Non-patent literature cited in the description**

- **PS. LIAO** ; **TS. CHEN** ; **PC. CHUNG**. A Fast Algorithm for Multilevel Thresholding. *Journal of Information Science and Engineering*, 2001, vol. 17, 713-727

- **MICHAEL DOUBE** ; **MICHAL M KLOSOWSKI** ; **IGNACIO ARGANDA-CARRERAS** ; **FABRICE P CORDELIERES** ; **ROBERT P DOUGHERTY** ; **JONATHAN S JACKSON** ; **BENJAMIN SCHMID** ; **JOHN R HUTCHINSON** ; **SANDRA J SHEFELBINE**. BoneJ: Free and extensible bone image analysis in ImageJ. *Bone*, December 2010, vol. 47 (6), 1076-1079